# FASCICULE DE BREVET EUROPEEN

(11) **EP 2 203 528 B1**
(45) Date de publication et mention de la délivrance du brevet: **30.05.2012**
(21) Numéro de dépôt: 08841383.6
(22) Date de dépôt: 16.10.2008
(51) Int. Cl.: D01F 1/07, D06M 13/295, C08K 5/521, C09D 7/12, D01F 11/04, D06M 13/292, D01F 1/10

(54) **AGENT D'HYDROPHILISATION D'UNE MATIERE PLASTIQUE ORGANIQUE**
MITTEL ZUR HYDROPHILIERUNG EINES ORGANISCHEN KUNSTSTOFFMATERIALS
AGENT FOR THE HYDROPHILISATION OF AN ORGANIC PLASTIC MATERIAL

(30) Priorité: 24.10.2007 FR 0707459
(43) Date de publication de la demande: 07.07.2010
(73) Titulaire: Rhodia Opérations, 93306 Aubervilliers (FR)
(72) Inventeur: HERVE, Pascal, West Windsor New Jersey 08550 (US); DURAND, Roland, F-69720 Saint Bonnet De Mure (FR); TOUZET, Sylvie, F-92160 Antony (FR)
(86) Numéro de dépôt international: PCT/EP2008/063959
(87) Numéro de publication internationale: WO 2009/053306

(56) Documents cités:
- WO-A-2006/056706
- US-A- 5 238 982
- US-A- 6 046 254
- US-A1- 2003 193 110
- US-A1- 2005 054 253
- LJUNGBERG ET AL: "Nanocomposites of isotactic polypropylene reinforced with rod-like cellulose whiskers" POLYMER, ELSEVIER SCIENCE PUBLISHERS B.V, GB, vol. 47, no. 18, 23 août 2006 (2006-08-23), pages 6285-6292, XP005600847 ISSN: 0032-3861
- DATABASE WPI Week 200055 Thomson Scientific, London, GB; AN 2000-581618 XP002480846 & JP 2000 186191 A (AKISHIMA KAGAKU KOGYO) 4 juillet 2000 (2000-07-04)
- LJUNGBERG N ET AL: "Nanocomposites of isotactic polypropylene reinforced with rod-like cellulose whiskers", POLYMER, ELSEVIER SCIENCE PUBLISHERS B.V, GB LNKD- DOI:10.1016/J.POLYMER.2006.07.013, vol. 47, no. 18, 23 August 2006 (2006-08-23), pages 6285-6292, XP025231824, ISSN: 0032-3861 [retrieved on 2006-08-23]

## Description

L'invention concerne l'utilisation d'un agent d'hydrophilisation par incorporation dans une matière plastique organique telle qu'un polymère thermoplastique permettant d'obtenir un comportement hydrophile de la surface des objets fabriqués avec lesdites matières.

Les matières plastiques organiques tels que les polyesters, les polyamides, les polyoléfines, et plus particulièrement le polypropylène, présentent normalement des surfaces très hydrophobes, ce qui constitue un inconvénient pour de nombreuses applications des objets fabriqués à partir de ces matières plastiques.

Par exemple, les voiles ou les films, poreux ou discontinus, fabriqués à partir de fils ou de fibres de polypropylène ou de polyester, obtenus par la technique dite des non tissés, que nous appellerons sous le terme générique de «surface textile non tissée» ont un comportement de surface essentiellement hydrophobe. Ce comportement nécessite qu'ils soient enduits superficiellement, en post-traitement, avec des compositions de surfactants solubles, pour être utilisables dans les applications comme l'hygiène, l'essuyage, les couches culottes....

Ce traitement de surface a le désavantage de ne pas être durable et aussi de laisser dissoudre au contact de l'eau, le surfactant utilisé dans la couche de traitement. Ce phénomène est particulièrement à éviter dans les applications d'hygiène corporelle comme les couches culottes. C'est pourquoi le procédé d'incorporation de l'agent hydrophilisation dans la matière plastique est particulièrement intéressant pour ce type d'application et est décrit dans les brevets WO 2006/056706 et WO 2006/056707. Egalement l'hydrophilisation de la surface d'objets est recherchée dans d'autres applications par exemple celles concernant des objets massiques telles que des pièces pour l'industrie automobile.

On désire pouvoir peindre ces pièces, et, les plastiques tels que le polypropylène ne sont pas aptes à être peints. Dans ce cas, le traitement de surface par une enduction d'une espèce hydrophile ou amphiphile n'est pas une solution viable car le traitement hydrophilisant n'est ni durable ni adhérent.

Dans une autre sorte d'application, l'hydrophilie est recherchée car elle permettrait de nettoyer à l'eau la surface en question. En particulier les récipients à usage alimentaire en polyoléfine (PE, PP) posent un problème de nettoyage lorsqu'on veut les laver dans un lave-vaisselle automatique. Alors que tous les ustensiles en verre ou en céramiques ressortent propres et secs à la sortie du lave-vaisselle, les ustensiles en polyoléfines ressortent encore mouillés, avec des gouttes d'eau non étalées, à cause de la grande hydrophobie des ustensiles et récipients concernés.

Enfin l'hydrophilie des emballages ou des films en polypropylène est aussi recherchée pour éviter l'ensalissement, le dépôt de poussière, la buée, lors du stockage des produits emballés sous films polypropylène dans les rayons des surfaces de vente. A ce niveau, l'hydrophilie contribue à la non adhésion de poussières ou de salissures grasses, mais aussi à l'écoulement des charges d'électricité statique responsable de certains types d'ensalissement.

Un des buts de la présente invention est donc de trouver un moyen de préparer une matière plastique qui présente une surface hydrophile améliorée, l'hydrophilie pouvant être obtenue par un procédé d'incorporation dans la matière fondue ou.

Un autre but de l'invention est de proposer des agents d'hydrophilisation et leur utilisation dans la matière plastique permettant d'obtenir une surface hydrophile améliorée.

Ces buts, et d'autres, sont atteints par la présente invention qui propose l'utilisation comme agent d'hydrophilisation d'une matière plastique organique en particulier un polymère thermoplastique, d'un composé choisi parmi les ester phosphates polyalcoxylés, sous forme acide ou sous forme de sel.

Le procédé de préparation du polymère thermoplastique dans lequel l'agent d'hydrophilisation a été incorporé dans la masse de la matière plastique comprend l'incorporation de l'additif utilisé pour obtenir cette hydrophilie de surface, le dit additif étant mélangé et co-fondu avec la matière plastique (addition de l'additif dans la masse) .

Le mélange fondu du polymère thermoplastique et de l'additif est mis en forme par tous moyens conventionnels (extrusion, injection, tirage de films...) pour obtenir les objets désirés. Par polymère thermoplastique on entend plus particulièrement les polyesters, les polyamides, les polyoléfines tels que le polyéthylène et le polypropylène.

L'agent d'hydrophilisation est choisi parmi les esters phosphates polyalcoxylés, sous forme acide ou sous forme de sel. L'agent d'hydrophilisation répond plus particulièrement à la formule suivante:

[R"-(O-A")_{y}-O]_{x"} P(=O)(OM)_{x'},

où:
- M est choisi parmi un proton, un cation ou un mélange, par exemple H⁺, K⁺, Na⁺
- x' et x" sont égaux à 1 ou 2, à la condition que la somme de x' et x" soit égale à 3,
- y, qui est une valeur moyenne, est compris entre 1 et 100, de préférence entre 1 et 15,
- les groupes R" identiques ou différents, représentent un radical hydrocarboné comprenant 1 à 35 atomes de carbone, et
- les groupes A" identiques ou différents représentent un radical alkylène linéaire ou ramifié comportant 2 à 4 atomes de carbone.

Les groupes R", identiques ou différents représentent un groupe alkyle, alkylaryle, polyalkylaryle, (polyarylalkyl)aryle (les groupes alkyle pouvant être linéaires ou ramifiés, saturés ou insaturés), en C₁-C₃₅, de préférence en C₅-C₂₀. En ce qui concerne les composés polyalcoxylés, il peut s'agir de composés polyéthoxylés.

Plus particulièrement, les groupes R" sont un radical alkyles ou alcényles portant une ou plusieurs insaturations éthyléniques, linéaires ou ramifiés, contenant 8 à 26 atomes de carbone. A titre d'exemples de tels radicaux, on peut citer notamment les radicaux stéaryle, oléyle, linoléyle, et linolényle. En outre, les radicaux R", identiques ou non, peuvent être des radicaux aromatiques portant des substituants alkyle, arylalkyle, ou alkylaryle ; ces radicaux comprenant 6 à 30 atomes de carbone. A titre d'exemples de tels radicaux, on peut citer entre autres les radicaux nonylphényle, mono-, di- et tristyrylphényle.

Plus particulièrement, les groupements (O-A"), identiques ou non, correspondent à un radical oxyéthyléné, oxypropyléné, oxybutyléné, ou leurs mélanges. De préférence, ledit groupement correspond à un radical oxyéthyléné et/ou oxypropyléné.

Des agents d'hydrophilisation utiles sont notamment commercialisés par Rhodia sous les dénominations Lubrhophos® et Rhodafac®.

On mentionne que les agents d'hydrophilisation sont de préférence présents dans la formulation sous forme salifiée, neutralisée. La neutralisation peut être obtenue à l'aide de toute base organique ou minérale, par exemple NaOH, KOH (M = K⁺, Na⁺). On peut notamment utiliser des amines organiques, par exemples des amines grasses éventuellement polyalcoxylées. On donne plus de détails ci-dessous.

La quantité d'agent d'hydrophilisation introduite dans le polymère dans la masse est telle que le rapport en poids entre l'agent d'hydrophilisation et le polymère thermoplastique est compris entre 0,5/99,5 et 10/90, plus spécifiquement entre 1/99 et 3/97.

Le composé ester phosphate polyaloxylé peut être compris dans une composition comprenant la matière plastique.

Le polymère thermoplastique est choisi parmi les polyesters, les polyamides, ou les polyoléfines tels que le polyéthylène et le polypropylène.

L'agent d'hydrophilisation est mélangé et co-fondu avec la matière plastique, de préférence un polymère thermoplastique.

Le polymère thermoplastique se présente en général sous forme de granulés solides. L'agent d'hydrophilisation peut être mélangé à température ambiante avec les granulés de polymères puis introduit dans un outil de mélange porté en température.

L'agent d'hydrophilisation peut également être introduit dans l'outil de mélange dans lequel est déjà présent le polymère à l'état fondu.

L'agent d'hydrophilisation peut être mélangé au polymère thermoplastique éventuellement avec d'autres ingrédients, par exemple des charges ou des stabilisants, par mélange au polymère thermoplastique avant fusion, par introduction directe dans le polymère thermoplastique fondu, et/ou par mélange maître.

L'outil de mélange en température peut être une cuve munie de rotors et chauffée par une circulation de fluide. On parle alors de mélangeur interne. C'est un procédé "batch". On peut citer par exemple un mélangeur Brabender. On récupère après refroidissement une ébauche de matière solide qui peut être mise en forme dans un moule par compression.

L'outil de mélange en température peut également être une extrudeuse dans laquelle la matière est transportée, chauffée et malaxée par des éléments de vis en rotation. C'est un procédé en "continu". On peut citer par exemple une extrudeuse Werner ZSK30. On récupère un jonc de matière fondue qui est refroidit puis coupé pour obtenir des granulés.

Ces granulés peuvent ensuite être injectés sous forme de pièces d'essais ou de matériaux finis.

Lorsque l'agent d'hydrophilisation est sous forme solide, c'est-à-dire sous forme d'une poudre, de paillettes ou de granulés, l'incorporation se fait alors aisément comme indiqué ci-dessus.

Lorsque l'agent d'hydrophilisation est sous la forme d'un liquide, ledit liquide comportant 100% d'agent hydrophilisant, ou bien l'agent hydrophilisant étant en solution dans un solvant, il existe alors plusieurs possibilités d'incorporation.

Il est possible de réaliser une incorporation directe du liquide, avec ou sans évaporation du solvant suivant si la température d'ébullition du liquide (agent hydrophilisant ou solvant) est en dessous ou au dessus de la température de transformation (autour de 180°C).

Il est possible également d'imprégner ce liquide sur un support poreux, comme par exemple une silice de précipitation pour obtenir une poudre. Cette poudre peut alors être mise en forme pour faciliter son utilisation.

On peut citer par exemple le document FR 2 843 122 qui décrit des moyens pour incorporer des liquides dans des polymères thermoplastiques.

Le procédé de préparation d'une composition comprenant le polymère thermoplastique et l'agent hydrophilisant est donc caractérisé en ce qu'on mélange l'agent d'hydrophilisation et le polymère thermoplastique sous forme fondue.

Le procédé de préparation d'une composition comprenant le polymère thermoplastique et l'agent hydrophilisant est donc également caractérisé en ce que l'agent d'hydrophilisation est mélangé au polymère thermoplastique éventuellement avec d'autres ingrédients, par exemple des charges ou des stabilisants, par mélange au polymère thermoplastique avant fusion, par introduction directe dans le polymère thermoplastique fondu, et/ou par mélange maître.

Les mélanges fondus de polymère thermoplastique et d'agent hydrophilisant peuvent être mis en forme par tous moyens conventionnels (extrusion, injection, tirage de films...) pour obtenir les objets désirés.

Les mélanges fondus de polymère thermoplastique et d'agent hydrophilisant peuvent ainsi être mis sous forme de poudre à mouler, sous forme d'un objet extrudé et/ou soufflé et/ou injecté, sous forme d'un film, ou sous forme de fibres fils ou filaments, éventuellement assemblés en surface textile tissée ou non tissée.

A titre d'exemples d'objets en polymère thermoplastique à surface hydrophilisée on peut citer notamment une surface textile non tissée comprenant des fibres à base d'une composition selon l'invention.

On peut citer en particulier une surface textile non tissée comprenant des fibres à base d'une composition selon l'invention dans laquelle le polymère thermoplastique est à base de polypropylène.

Cette surface textile peut être utilisée dans la fabrication de couche-culotte pour bébé, de produit d'hygiène féminine ou de produit pour le soin de l'incontinence des adultes. A titre d'exemples d'objets en polymère thermoplastique à surface hydrophilisée on peut citer également des objets massiques telles des pièces pour l'industrie automobile.

A titre d'exemples d'objets en polymère thermoplastique à surface hydrophilisée on peut citer également les récipients à usage alimentaire en polyoléfine (polyéthylène ou polypropylène.

A titre d'exemples d'objets en polymère thermoplastique à surface hydrophilisée on peut citer également les emballages ou des films en polypropylène.

L'invention concerne enfin une utilisation des esters phosphates polyalcoxylés tels que définis précédemment à titre d'agent d'hydrophilisation d'une composition comprenant une matière plastique organique, en particulier un polymère thermoplastique.

L'hydrophilie de surface est évaluée par la mesure de l'angle de contact entre une goutte d'eau purifiée, distillée et ladite surface. Une goutte d'eau distillée de taille calibrée est déposée dans des conditions standardisées et répétitives sur la surface à étudier. Elle s'étale ou se rétracte plus ou moins selon l'hydrophilie de la surface, et avec un appareillage adapté, il est possible de mesurer l'angle formé par la goutte déposée et la surface.

L'appareillage utilisé peut être par exemple un goniomètre de mesure de l'angle de mouillage, par exemple de marque Tantec. Il est possible également d'utiliser un appareil de mesure automatique, tel que le tensiomètre à goutte avec banc optique de la société IT Concept. C'est le cas des mesures qui ont été effectuées dans les exemples présentés ci-dessous. La manipulation consiste à déposer sur la surface propre et lisse de l'échantillon une goutte d'eau de volume calibré égale à deux microlitres à l'aide d'une seringue. La goutte est éclairée par une source lumineuse uniforme, de type sphère intégrante, l'image de son profil est projetée par un téléobjectif télécentrique sur une caméra CCD. Elle est numérisée et ensuite traitée par un logiciel pour déterminer plusieurs fois par seconde les angles de contact droit et gauche définis comme les angles entre le plan formé par le support et les plans tangents de part et d'autre de la base de la goutte.

Typiquement, le polypropylène pur a un angle de contact avec l'eau pure de 105°. Les agents hydrophilisants selon l'invention, lorsqu'ils sont mélangés au polymère thermoplastique polypropylène, permettent d'abaisser très sensiblement cette valeur, à des niveaux compris entre 70 et 85°.

D'autres aspects et avantages de l'invention apparaîtront à la lumière des exemples qui sont présentés ci-dessous à titre illustratif et nullement limitatif.

Sans indication contraire, tous les pourcentages indiqués dans la présente demande sont des pourcentages en poids.

### Exemple 1 -Mise en oeuvre de ces produits

Les constituants (94.9% de polymère polypropylène homopolymère isotactique en granulés commercialisé par la société ATOFINA sous le nom PPH4060, 5% d'additif hydrophilisant et 0.1% de stabilisant thermique Irganox B225) sont introduits dans la cuve d'un mélangeur interne de marque "Brabender" portée à une température de 150°C.

La cuve est munie de deux rotors contra-rotatifs de type thermoplastique W50, tournant à une vitesse de rotation de 125RPM. Compte tenu du cisaillement interne, la température finale du mélange est comprise entre 180°C et 190°C. Après une temps de mélangeage de 5 minutes, une ébauche de polymère chargée est extraite de la cuve, et est pressée dans un moule de 800µm d'épaisseur, entre deux plateaux de compression chauffés à 200°C sous 200 bars de pression pendant 2 minutes. Le moule est ensuite refroidi entre deux plateaux refroidis à 18°C sous une pression de 200 bars pendant 4 minutes.

Après refroidissement et consolidation, ces éprouvettes font l'objet de divers tests physico-chimiques destinés à vérifier l'hydrophilie de leur surface et les propriétés qui en découlent.

### Remarques sur la mise en oeuvre et effet des additifs sur les mélanges fondus:

On note différents effets physiques pendant le mélangeage dans le malaxeur Brabender, qui peuvent apporter des avantages importants au niveau de cette phase préparatoire.

### Agents d'hydrophilisation utilisés :

Les 2 agents utilisés sont définis dans le tableau (I) ci-après :

**Tableau (1)**

| Notation | Structure de R" | Nom |
|---|---|---|
| A | Alkyle en C¹⁶-C¹⁸ et 2 OE ionique | Rhodafac PA32 ionisé |
| B | Alkyle en C¹⁶-C¹⁸ et 5 OE ionique | Rhodafac PA35 ionisé |
| Témoin C | Polyéthylène glycol polyester | Repel-o-tex SRP6 |

L'agent Repel-o-tex SRP6 est un produit Rhodia décrit dans WO 2006/056706 précité

### Exemple 2 - Effets hydrophilisants

Ils sont donnés, (par l'intermédiaire de la mesure de l'angle de contact avec de l'eau distillée), dans le tableau (II) suivant.

Les mesures ont été effectuées dans les exemples présentés ci-dessous en utilisant un tensiomètre à goutte avec banc optique dénommé le SDT 200 de la société IT Concept. La manipulation consiste à déposer sur la surface propre et lisse de l'échantillon une goutte d'eau de volume calibré égale à deux microlitres à l'aide d'une seringue. La goutte est éclairée par une source lumineuse uniforme, de type sphère intégrante, l'image de son profil est projetée par un téléobjectif télécentrique sur une caméra CCD. Elle est numérisée et ensuite traitée par un logiciel pour déterminer plusieurs fois par seconde les angles de contact droit et gauche définis comme les angles entre le plan formé par le support et les plans tangents de part et d'autre de la base de la goutte. Le résultat indiqué dans le tableau (II) correspond à la moyenne de 10 à 15 mesures.

Les résultats obtenus sont rassemblés dans le tableau II ci-après :

**Tableau II**

| Age de l'éprouvette et traitement | Mesure au moment du mélange |
|---|---|
| Témoin PP sans additif | 102°±2° |
| Témoin C | 65°±2° |
| PP + A | 42°±2° |
| PP + B | 26°±2° |

| | |
|---|---|
| PP signifie polypropylène | |

On constate que l'hydrophilie de la surface est bien obtenue.

On constate également que les agents d'hydrophilisation selon l'invention sont plus actifs que le témoin C.

## Revendications

1. Utilisation comme agent d'hydrophilisation d'une matière plastique organique en particulier un polymère thermoplastique, d'un composé choisi parmi les ester phosphates polyalcoxylés, sous forme acide ou sous forme de sel, l'agent d'hydrophilisation étant incorporé dans la masse de la matière plastique.

2. Utilisation selon la revendication 1, **caractérisée en ce que** l'agent d'hydrophilisation présente la formule (I) suivante:
[R"-(O-A")_{y}-O]_{x"} P(=O)(OM)_{x'}, (I)
où:
- M est choisi parmi un proton, un cation ou un mélange,
- x' et x" sont égaux à 1 ou 2, à la condition que la somme de x' et x" soit égale à 3,
- y, qui est une valeur moyenne, est compris entre 1 et 100, de préférence entre 1 et 15,
- les groupes R" identiques ou différents, représentent un radical hydrocarboné comprenant 1 à 35 atomes de carbone, et
- les groupes A" identiques ou différents représentent un radical alkylène linéaire ou ramifié comportant 2 à 4 atomes de carbone.

3. Utilisation selon la revendication 2, **caractérisée en ce que** dans la formule (I) les groupes R" sont un groupe alkyle, alkylaryle, polyalkylaryle, (polyarylalkyl)aryle, les groupes alkyle pouvant être linéaires ou ramifiés, saturés ou insaturés, en C₁-C₃₅, de préférence en C₅-C₂₀.

4. Utilisation selon la revendication 3, **caractérisée en ce que** dans la formule (I) les groupes R" sont un radical alkyle ou alcényle portant une ou plusieurs insaturations éthyléniques, linéaires ou ramifiés, contenant 8 à 26 atomes de carbone.

5. Utilisation selon la revendication 2, **caractérisée en ce que** dans la formule (I) les groupes R" sont stéaryle, oléyle, linoléyle, ou linolényle, nonylphényle, mono-, di- ou tri- styrylphényle.

6. Utilisation selon l'une quelconque des revendications 2 à 5, **caractérisée en ce que** dans la formule (I), les groupements (O-A"), correspondent à un radical oxyéthyléné, oxypropyléné, oxybutyléné, ou leurs mélanges.

7. Utilisation selon l'une des revendications précédentes, **caractérisée en ce que** la matière plastique est un polymère thermoplastique, ou une composition comprenant un polymère thermoplastique.

8. Utilisation selon la revendication 7, **caractérisée en ce que** le polymère thermoplastique est choisi parmi les polyesters, les polyamides, ou les polyoléfines tels que le polyéthylène et le polypropylène.

9. Utilisation selon la revendication 8, **caractérisée en ce que** le polymère thermoplastique est à base de polypropylène.

10. Utilisation selon l'une des revendications précédentes, **caractérisée en ce que** le composé ester phosphate est compris dans une composition comprenant la matière plastique.

11. Utilisation selon la revendication 10, **caractérisée en ce que** la matière plastique est une composition comprenant un polymère thermoplastique, sous forme de poudre à mouler, sous forme d'un objet extrudé et/ou soufflé eUou injecté, sous forme d'un film, ou sous forme de fibres fils ou filaments, éventuellement assemblés en surface textile tissée ou non tissée.

12. Utilisation selon l'une des revendications 10 et 11, **caractérisée en ce que** le rapport en poids entre l'agent d'hydrophilisation et le polymère thermoplastique est compris entre 0,5/99,5 et 10/90, plus spécifiquement entre 1/99 et 3/97.

13. Utilisation selon l'une des revendications 11 et 12, **caractérisée en ce que** la composition est une composition comprenant un polymère thermoplastique et est obtenue par mélange de l'agent d'hydrophilisation et du polymère thermoplastique sous forme fondue.

14. Utilisation selon la revendication 13, **caractérisée en ce que** l'agent d'hydrophilisation est mélangé au polymère thermoplastique éventuellement avec d'autres ingrédients, par exemple des charges ou des stabilisants, par mélange au polymère thermoplastique avant fusion, par introduction directe dans le polymère thermoplastique fondu, et/ou par mélange maître.

## Claims

1. Use, as an agent for the hydrophilization of an organic plastic, in particular a thermoplastic polymer, of a compound selected from polyalkoxylated phosphate esters, in acid form or in salt form, the hydrophilizing agent being incorporated into the bulk of the plastic.

2. Use according to Claim 1, **characterized in that** the hydrophilizing agent has the formula (I) below:
[R"-(O-A")_{y}-O]_{x"}P(=O) (OM)_{x'}, (I)
where:
- M is chosen from a proton, a cation or a mixture;
- x' and x" are equal to 1 or 2, on condition that the sum of x' and x" is equal to 3;
- y, which is an average value, is between 0 and 100, preferably between 1 and 15;
- the R" groups, which are identical or different, represent a hydrocarbon-based radical comprising 1 to 35 carbon atoms; and
- the A" groups, which are identical or different, represent a linear or branched alkylene radical, comprising 2 to 4 carbon atoms.

3. Use according to Claim 2, **characterized in that**, in formula (I), the R" groups are a C₁-C₃₅, preferably C₅-C₂₀, alkyl, alkylaryl, polyalkylaryl or (polyarylalkyl)aryl group, the alkyl groups possibly being linear or branched, saturated or unsaturated.

4. Use according to Claim 3, **characterized in that**, in formula (I), the R" groups are an alkyl or alkenyl radical bearing one or more ethylenic unsaturated groups, which are linear or branched, containing 8 to 26 carbon atoms.

5. Use according to Claim 2, **characterized in that**, in formula (I), the R" groups are stearyl, oleyl, linoleyl or linolenyl, nonylphenyl, monostyrylphenyl, distyrylphenyl or tristyrylphenyl.

6. Use according to any one of Claims 2 to 5, **characterized in that**, in the formula (I), the (O-A") groups correspond to an oxyethylenated, oxypropylenated or oxybutylenated radical, or mixtures thereof.

7. Use according to one of the preceding claims, **characterized in that** the plastic is a thermoplastic polymer, or a composition comprising a thermoplastic polymer.

8. Use according to Claim 7, **characterized in that** the thermoplastic polymer is selected from polyesters, polyamides or polyolefins such as polyethylene and polypropylene.

9. Use according to Claim 8, **characterized in that** the thermoplastic polymer is based on polypropylene.

10. Use according to one of the preceding claims, **characterized in that** the phosphate ester compound is included in a composition comprising the plastic.

11. Use according to Claim 10, **characterized in that** the plastic is a composition comprising a thermoplastic polymer, in the form of a powder to be moulded, in the form of an extruded and/or blow-moulded and/or injection-moulded article, in the form of a film, or in the form of fibres, yarns or filaments, optionally assembled as a woven or nonwoven textile surface.

12. Use according to either of Claims 10 and 11, **characterized in that** the weight ratio between the hydrophilizing agent and the thermoplastic polymer is between 0.5/99.5 and 10/90, more specifically between 1/99 and 3/97.

13. Use according to either of Claims 11 and 12, **characterized in that** the composition is a composition comprising a thermoplastic polymer and is obtained by melt-blending the hydrophilizing agent and the thermoplastic polymer.

14. Use according to Claim 13, **characterized in that** the hydrophilizing agent is blended with the thermoplastic polymer, optionally with other ingredients, for example fillers or stabilizers, by blending with the thermoplastic polymer before melting, by direct introduction into the molten thermoplastic polymer, and/or via a masterbatch.

## Patentansprüche

1. Verwendung einer Verbindung, die unter polyalkoxylierten Phosphatestern in Säureform oder in Salzform ausgewählt ist, als Hydrophilierungsmittel für einen organischen Kunststoff, insbesondere ein thermoplastisches Polymer, wobei das Hydrophilierungsmittel in die Kunststoffmasse eingearbeitet wird.

2. Verwendung nach Anspruch 1, **dadurch gekennzeichnet, dass** das Hydrophilierungsmittel die folgende Formel (I) aufweist:
[R"-(O-A")_{y}-O]_{x"}P(=O) (OM)_{x'} (I).
wobei:
- M unter einem Proton, einem Kation oder einem Gemisch ausgewählt ist,
- x' und x" gleich 1 oder 2 sind, mit der Maßgabe, dass die Summe von x' und x" gleich 3 ist,
- y, wobei es sich um einen Durchschnittswert handelt, zwischen 1 und 100 und vorzugsweise zwischen 1 und 15 liegt,
- die Gruppen R" gleich oder verschieden sind und für einen Kohlenwasserstoffrest mit 1 bis 35 Kohlenstoffatomen stehen und
- die Gruppen A" gleich oder verschieden sind und für einen linearen oder verzweigten Alkylenrest mit 2 bis 4 Kohlenstoffatomen stehen.

3. Verwendung nach Anspruch 2, **dadurch gekennzeichnet, dass** in der Formel (I) die Gruppen R" eine Alkyl-, Alkylaryl-, Polyalkylaryl- oder (Polyaryl-alkyl)arylgruppe, wobei die Alkylgruppen linear oder verzweigt und gesättigt oder ungesättigt sein können, mit 1 bis 35 C-Atomen und vorzugsweise 5 bis 20 C-Atomen sind.

4. Verwendung nach Anspruch 3, **dadurch gekennzeichnet, dass** in der Formel (I) die Gruppen R" ein Alkyl- oder Alkenylrest mit einer oder mehreren linearen oder verzweigten ethylenischen Ungesättigtheiten mit 8 bis 26 Kohlenstoffatomen sind.

5. Verwendung nach Anspruch 2, **dadurch gekennzeichnet, dass** in der Formel (I) die Gruppen R" Stearyl, Oleyl, Linoleyl oder Linolenyl, Nonylphenyl, Mono-, Di- oder Tristyrylphenyl sind.

6. Verwendung nach einem der Ansprüche 2 bis 5, **dadurch gekennzeichnet, dass** in der Formel (I) die (O-A") -Gruppierungen einem oxyethylenierten, oxypropylenierten oder oxybutylenierten Rest oder Gemischen davon entsprechen.

7. Verwendung nach einem der vorhergehenden Ansprüche, **dadurch gekennzeichnet, dass** es sich bei dem Kunststoff um ein thermoplastisches Polymer oder eine Zusammensetzung, die einen thermoplastischen Kunststoff umfasst, handelt.

8. Verwendung nach Anspruch 7, **dadurch gekennzeichnet, dass** das thermoplastische Polymer unter Polyestern, Polyamiden oder Polyolefinen wie Polyethylen und Polypropylen ausgewählt ist.

9. Verwendung nach Anspruch 8, **dadurch gekennzeichnet, dass** das thermoplastische Polymer auf Polypropylen basiert.

10. Verwendung nach einem der vorhergehenden Ansprüche, **dadurch gekennzeichnet, dass** die Phosphatesterverbindung in einer Zusammensetzung, die den Kunststoff umfasst, enthalten ist.

11. Verwendung nach Anspruch 10, **dadurch gekennzeichnet, dass** es sich bei dem Kunststoff um eine Zusammensetzung handelt, die ein thermoplastisches Polymer in Form eines abzuformenden Pulvers, in Form eines extrudierten und/oder blasgeformten und/oder spritzgegossenen Gegenstands, in Form einer Folie oder in Form von Fasern, Garnen oder Filamenten, die gegebenenfalls als textile Webstoff- oder Vliesstofffläche zusammengefügt sind, umfasst.

12. Verwendung nach einem der Ansprüche 10 und 11, **dadurch gekennzeichnet, dass** das Gewichtsverhältnis zwischen Hydrophilierungsmittel und thermoplastischem Polymer zwischen 0,5/99,5 und 10/90, spezieller zwischen 1/99 und 3/97, liegt.

13. Verwendung nach einem der Ansprüche 11 und 12, **dadurch gekennzeichnet, dass** es sich bei der Zusammensetzung um eine Zusammensetzung handelt, die ein thermoplastisches Polymer umfasst und durch Mischen des Hydrophilierungsmittels und des thermoplastischen Polymers in schmelzflüssiger Form erhalten wird.

14. Verwendung nach Anspruch 13, **dadurch gekennzeichnet, dass** das Mischen des Hydrophilierungsmittels mit dem thermoplastischen Polymer, gegebenenfalls mit anderen Bestandteilen, beispielsweise Füllstoffen oder Stabilisatoren, durch Mischen mit dem thermoplastischen Polymer vor dem Schmelzen, durch direktes Eintragen in das schmelzflüssige
thermoplastische Polymer und/oder mit Hilfe eines Masterbatch erfolgt.
